# EUROPEAN PATENT APPLICATION

(11) **EP 2 410 405 A2**
(43) Date of publication of application: **25.01.2012**
(21) Application number: 11174861.2
(22) Date of filing: 21.07.2011
(51) Int. Cl.: G06F 3/023

(54) **Methods and apparatuses for statistically sorting characters for multi-tap keyboards**

(30) Priority: 23.07.2010 US 367153 P
(71) Applicant: Caine Allan, David, Waterloo ON N2L 5Z5 (CA); Elizarov, Michael, Waterloo ON N2L 3L3 (CA)
(72) Inventor: Caine Allan, David, Waterloo ON N2L 5Z5 (CA); Elizarov, Michael, Waterloo ON N2L 3L3 (CA)
(74) Representative: MERH-IP Matias Erny Reichl Hoffmann

(57) **Abstract**

Methods and apparatuses for statistically sorting characters for multi-tap keyboards are disclosed. The method includes receiving, by a processor, an indication of a selection of a key, and adding, by the processor, one or more high probability characters to a list of key characters. The method also includes requesting, by the processor, a plurality of sorted characters, and receiving, by the processor, the plurality of sorted characters. In addition, the method includes adding, by the processor, the plurality of sorted characters to the list of key characters, associating, by the processor, the list of key characters with the selected key, and displaying, on a display device, a first character of the list of key characters.

## Description

### Technical Field

The present disclosure relates generally to methods and apparatuses for outputting characters in a handheld electronic device and, more particularly, to methods and apparatuses for statistically ordering accented characters for multi-tap keyboards.

### Background

Numerous types of handheld electronic devices are known, such as, for example, personal data assistants (PDAs), handheld computers, two-way pagers, cellular telephones, and the like. Because handheld electronic devices are generally intended to be portable, they are typically of a relatively compact configuration. Despite the progressively smaller size of handheld electronic devices, they offer an increasingly greater number of applications and features. However, the keys of a handheld electronic device can only be reduced to a certain size before the keys become unusable. As a result, keys and other input components on smaller handheld electronic devices often perform multiple functions or may have multiple aspects or assigned features. For example, in order to enable text entry, a keypad must be capable of entering all twenty-six letters of the Latin alphabet, accented characters of non-English languages, as well as appropriate punctuation and other symbols.

One way of providing numerous letters in a small space has been to provide a "reduced keypad" in which multiple letters, symbols, and/or digits, and the like, are assigned to any given key. For example, a touch-tone telephone includes a reduced keypad by providing twelve keys, of which ten have associated digits, and of these ten keys eight have Latin letters assigned thereto. For instance, one of the keys includes the digit "2" as well as the letters "a", "b", and "c".

In order to enable a user to make use of the multiple letters, digits, symbols, and the like on any given key, numerous keystroke interpretation systems have been provided. For instance, a "multi-tap" system allows a user to substantially unambiguously specify a particular character on a key by pressing the same key a number of times equivalent to the position of the desired character on the key. For example, on the aforementioned touch-tone telephone key that includes the letters "a", "b", and "c", and the user desires to specify the letter "c", the user will press the key three times.

While such multi-tap systems have been generally effective for their intended purposes, they nevertheless may require a relatively large number of key inputs compared with the number of characters that ultimately are output. This may be especially apparent when the handheld electronic device is used to enter non-English language text including accented characters, e.g., "ó", "ö", "ò", and "ô". Typically, accented characters are associated with keys in an arbitrary order. So, for example, for the Dutch m/n/o key, the character set is "m", "n", "o", "ò", "ó", "ô", and "ö". As a result, for the user to access the character "ö", the user may be required to press the m/n/o key a total of 7 times.

Because the handheld electronic device using traditional ordering may require a greater number of key presses to enter text, battery life may be shortened and memory resources may not be used efficiently. The disclosed embodiments are configured to overcome these and other problems.

### Summary

In accordance with the present invention, as embodied and broadly described herein, a method for statistically sorting characters for multi-tap keyboards comprises: receiving, by a processor, an indication of a selection of a key; adding, by the processor, one or more high probability characters to a list of key characters; requesting, by the processor, a plurality of sorted characters; receiving, by the processor, the plurality of sorted characters; adding, by the processor, the plurality of sorted characters to the list of key characters; associating, by the processor, the list of key characters with the selected key; and displaying, on a display device, a first character of the list of key characters.

In accordance with the present invention, as embodied and broadly described herein, an apparatus for statistically sorting characters for multi-tap keyboards comprises:
at least one memory to store data and instructions; and at least one processor configured to access the at least one memory and, when executing the instructions, to: receive an indication of a selection of a key; add one or more high probability characters to a list of key characters; request a plurality of sorted characters; receive the plurality of sorted characters; add the plurality of sorted characters to the list of key characters; associate the list of key characters with the selected key; and display a first character of the list of key characters.

In accordance with the present invention, as embodied and broadly described herein, a method for statistically sorting characters for multi-tap keyboards comprises: receiving, by a processor, an indication of a selection of a key; sending, by the processor, a request to a cache to retrieve a stored list of key characters; determining, by the processor, if the stored list of key characters is available in the cache; if it is determined that the stored list of key characters is available in the cache, displaying on a display device, a first character of the stored list of key characters; and if it is determined that the stored list of key characters is not available in the cache, adding, by the processor, one or more high probability characters to a list of key characters; requesting, by the processor, a plurality of sorted characters; receiving, by the processor, the sorted characters; adding, by the processor, the sorted characters to the list of key characters; associating, by the processor, the list of key characters with the selected key; and displaying, on the display device, a first character of the list of key characters.

In accordance with the present invention, as embodied and broadly described herein, an apparatus for statistically sorting characters for multi-tap keyboards comprises: at least one memory to store data and instructions; and at least one processor configured to access the at least one memory and, when executing the instructions, to: receive an indication of a selection of a key; send a request to a cache to retrieve a stored list of key characters; determine if the stored list of key characters is available in the cache; if it is determined that the stored list of key characters is available in the cache, cause a first character of the stored list of key characters to be displayed on a display device; and if it is determined that the stored list of key characters is not available in the cache, add one or more high probability characters to a list of key characters; request a plurality of sorted characters; receive the sorted characters; add the sorted characters to the list of key characters; associate the list of key characters with the selected key; and cause a first character of the list of key characters to be displayed on the display device.

In accordance with the present invention, as embodied and broadly described herein, a method for inputting characters into a user device configured with a display screen and a multi-tap keyboard having a plurality of keys, each key having assigned thereto a plurality of characters, comprises: receiving, by a processor, input data indicating selection of one key of the plurality of keys; predicting, by the processor, a likelihood that the input data reflects selection of a particular character assigned to the selected one key based on a frequency of use of the particular character; and outputting, by the processor, the particular character as an output character on the display screen.

In accordance with the present invention, as embodied and broadly described herein, an apparatus for inputting characters comprises: a display screen; a multi-tap keyboard having a plurality of keys, each key having assigned thereto a plurality of characters; at least one memory to store data and instructions; and at least one processor configured to access the at least one memory and, when executing the instructions, to: receive input data indicating selection of one key of the plurality of keys; predict a likelihood that the input data reflects selection of a particular character assigned to t the selected key based on a frequency of use of the particular character; and output the particular character as an output character on the display screen.

In accordance with the present invention, as embodied and broadly described herein, a method for inputting characters into a user device configured with a display screen, a multi-tap keyboard having a first plurality of keys, each of the first plurality of keys having assigned thereto a plurality of characters, and a second keyboard having a second plurality of keys, each key of the second plurality of keys having assigned thereto a single character, the method comprises: receiving, by a processor, first input data indicating selection of one key of the first set of keys; displaying, on the display screen, an ordered set of keys with assigned characters, the order being determined based on a likelihood that the first input data reflects selection of the character assigned to each key; receiving, by the processor, second input data indicating selection of one key of the ordered set of keys; and outputting, by the processor, an output character corresponding to the selected one key of the ordered set of keys.

In accordance with the present invention, as embodied and broadly described herein, an apparatus for inputting characters comprises: a display screen; a multi-tap keyboard having a first plurality of keys, each key of the first plurality of keys having assigned thereto a plurality of characters;; at least one memory to store data and instructions; and at least one processor configured to access the at least one memory and, when executing the instructions, to: receive first input data indicating selection of one key of the first set of keys; display, on the display screen, an ordered set of keys with assigned characters, the order being determined based on a likelihood that the first input data reflects selection of the character assigned to each key; receive second input data indicating selection of one key of the ordered set of keys; and output, to the display screen, an output character corresponding to the selected one key of the ordered set of keys.

### Brief Description of the Drawings

The accompanying drawings, which are incorporated herein and constitute a part of this specification, illustrate aspects consistent with the present invention and, together with the description, serve to explain advantages and principles of the invention. In the drawings,

FIG. 1a is a front view of an example handheld device, consistent with certain disclosed embodiments;

FIG. 1b is a front view of an example handheld device, consistent with certain disclosed embodiments;

FIG. 2 is a schematic view of an example handheld device, consistent with certain disclosed embodiments;

FIG. 3 is a flowchart illustrating an example method of providing sorted characters, consistent with certain disclosed embodiments;

FIG. 4a is a diagram illustrating an example method of providing sorted characters, consistent with certain disclosed embodiments;

FIG. 4b is a diagram illustrating an example method of providing sorted characters, consistent with certain disclosed embodiments;

FIG. 4c is a diagram illustrating an example method of providing sorted characters, consistent with certain disclosed embodiments;

FIG. 4d is a diagram illustrating an example method of providing sorted characters, consistent with certain disclosed embodiments; and

FIG. 5 is a front view of an example handheld device, consistent with certain disclosed embodiments.

### Detailed Description

Systems and methods consistent with the present invention may be implemented in user devices, including, for example, handheld electronic devices that enable data entry using the "multi-tap" inputting methodology. Such systems and methods consistent with certain aspects of the present invention reduce the number of "taps" required to enter data, thereby extending battery life of the handheld electronic device and reducing memory resources associated with operation of the handheld electronic device. These and other benefits consistent with aspects of the present invention result from sorting characters, such as accented characters, based on an input probability. In this way, characters having a higher probability of being selected in a particular mode of operation of the handheld electronic device are presented for selection, or otherwise made selectable, ahead of characters that have a lower probability of being selected. In other configurations consistent with the present invention, handheld electronic devices may be configured in accordance with aspects of the present invention as disclosed in claims herein such that accented characters are assigned to input keys of the device in an order without regard to any instructions from a programmer.

Reference will now be made in detail to an implementation of the present invention as illustrated in the accompanying drawings. Wherever possible, the same reference numbers will be used throughout the drawings and the following description to refer to the same or like parts.

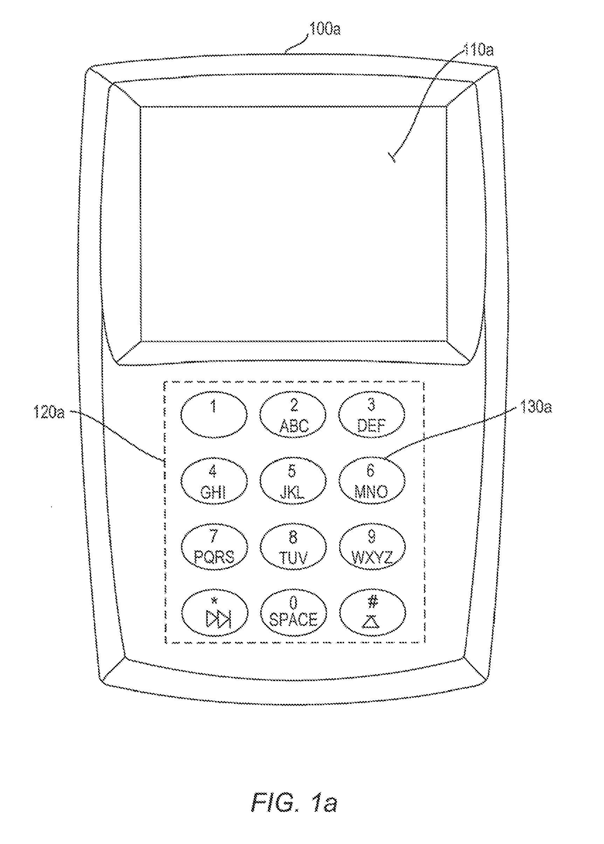

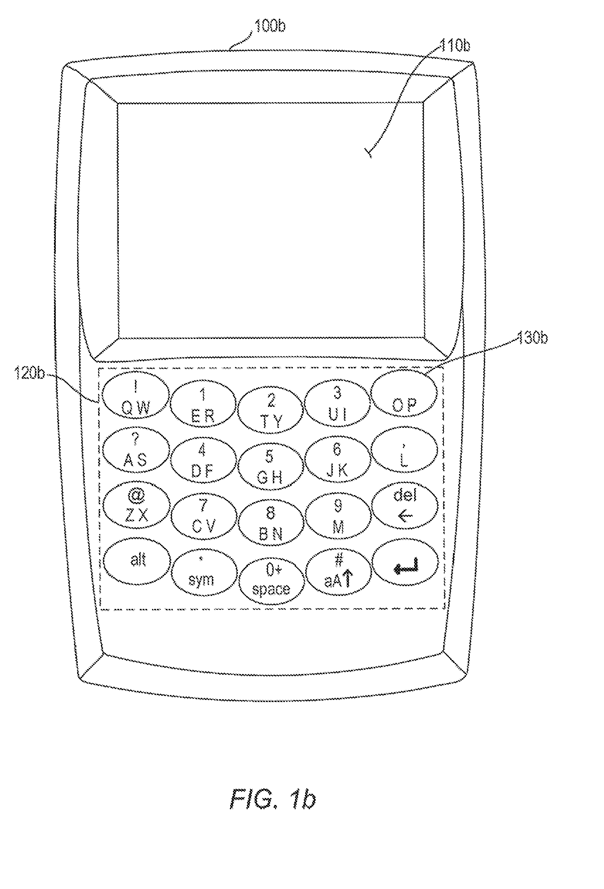

FIGS. 1a and 1b are diagrams of example "multi-tap" handheld electronic devices 100, in which systems and methods consistent with the present invention may be implemented. Specifically, FIG. 1a illustrates an example handheld electronic device 100a having a T12 key arrangement. That is, handheld electronic device 100a of FIG. 1a is an embodiment having a multi-tap reduced keypad with twelve keys, ten of which have associated digits *(i.e.,* "0" through "9"), eight of which have associated Latin letters *(i.e.,* "a" through "z"). FIG. 1b illustrates an example handheld electronic device 100b having a multi-tap reduced QWERTY key arrangement with a T20 key arrangement. That is, handheld electronic device 100b of FIG. 1b is an embodiment having a multi-tap reduced keypad with twenty keys. In FIG. 1b, an arrangement of Latin letters is associated with keys and the letters are generally presented in an order corresponding to the order of a standard QWERTY keyboard. As used herein, "multi-tap" processing refers to a character entry system or method whereby a user selects a desired character by pressing or, more generally, selecting the same key a consecutive number of times equivalent to the position of the desired character in a character set associated with the pressed key.

As shown in FIG. 1a, handheld electronic device 100a may include display 110a for displaying one or more characters, keypad 120a, and keys 130a. As shown in FIG. 1b, handheld electronic device 100b may include display 110b for displaying one or more characters, keypad 120b, and keys 130b.

Displays 110a and 110b may be any type of visual input/output configured to display one or more characters and/or receive input corresponding to one or more characters. In addition, displays 110a and 110b may be configured to display one or more diagrams, figures, pictures, words, etc. and/or to receive input corresponding to one or more diagrams, figures, pictures, words, characters, etc. In some embodiments, displays 110a and 110b may be touch-screen displays 110a and 110b, and may be configured to display respective representations of keypads 120a and 120b *(i.e.,* virtual keypad) and keys 130a and 130b *(i.e.,* virtual keys).

Each key 130 may be assigned a character, symbol, code, or operation. Characters may include, without limitation, any type of visual representation including, for example, Unicode characters; words in any language (e.g., Latin, Arabic, Cyrillic, Greek, etc.); letters in any language; digits of any numbering system (e.g., Roman, Arabic, decimal, hexadecimal, etc.); diacritical marks, such as, for example, accents (e.g., acute, double acute, grave, double grave, etc.), breve, caron, cedilla, circumflex, diaeresis, dot, hook, horn, macron, etc.; punctuation (e.g., period, comma, semicolon, colon, etc.); symbols and marks (e.g., tilde, hash, percentage, ampersand, bar, hyphen, etc.); mathematical operators (e.g., plus, minus, equal, etc.); superscripts and subscripts; emoticons; etc.

Keypads 120a and 120b may include any combination of keys 130a and 130b, respectively. Although keypads 120a and 120b are respectively illustrated in FIGS. 1a and 1b as physical structures, keypads 120a and 120b may also be realized as virtual keypads or any combination of physical and virtual keypads.

Keys 130a and 130b may include physical and/or virtual buttons by which input may be received from a user. In some embodiments, keys 130a and 130b may be touch-sensitive, i.e., input may be received by one or more touches from a user. A physical key may be one that appears as part of a physical keypad, such as keypads 120a and 120b; whereas a virtual key may be one that appears as part of a virtual keypad displayed on a display, such as display 110.

Keypads 120a and 120b and keys 130a and 130b may be of any configuration, such as a T20 key arrangement, an AZERTY key arrangement, a QWERTY key arrangement, or other key arrangement, whether presently known or unknown, and either reduced or not reduced.

Each of keys 130 may include one or more associated characters. That is, one or more characters are associated with each key 130 such that when a user selects a desired key 130 an associated character may be displayed on display 110. In a multi-tap embodiment, such as the example embodiments illustrated in FIGS. 1a and 1b one or more keys 130 may each have an associated character set, and a user may select one of the characters in the character set by sequentially selecting key 130 a number of times equivalent to the position of a character in the list of characters associated with key 130. That is, for a character in the first position in the list of characters associated with key 130, a user would select key 130 one time, for a character in the second position in the list of characters associated with key 130, a user would select key 130 two times, for a character in the third position in the list of characters associated with key 130, a user would select key 130 three times, and so on.

Characters may be printed on physical keys 130 and/or appear on virtual keys 130. In some embodiments, characters printed on virtual keys 130 may be different than characters printed on physical keys 130 of the same handheld electronic device 100. In other embodiments, characters printed on virtual keys 130 may be the same as characters printed on physical keys 130 of the same handheld electronic device 100.

In the example embodiments disclosed herein, the characters associated with a key 130 may be referred to as key characters. Key characters may include high probability characters and/or accented characters. High probability characters may be those characters that are drawn and/or printed on the face of key 130. For example, if the characters "m", "n", and "o" are printed on the face of key 130 (also referred to herein as m/n/o key 130), then the high probability characters for m/n/o key 130 are "m", "n", and "o". Generally, accented characters include any character associated with key 130 that is not a high probability character. Accented characters may include characters 130 having diacritical marks. In some embodiments, the accented characters associated with key 130 may vary based on the language used by handheld electronic device 100. For example, in the Dutch language, the accented characters associated with m/n/o key 130 may include "ó", "ö", "ò", and "ô". As another example, in the Spanish language, the accented characters associated with m/n/o key 130 may include "ó" and "ñ". In some example embodiments, a probability is associated with a character given the frequency of occurrence of said character in a language. For example, in the English language, the character "w" has a higher frequency of occurrence than the character "z". In other example embodiments, the probability associated with a character can be recalibrated according to the frequency of usage of said character by the user. Accordingly, if the user utilizes a particular character at a higher frequency, the probability of that character is increased.

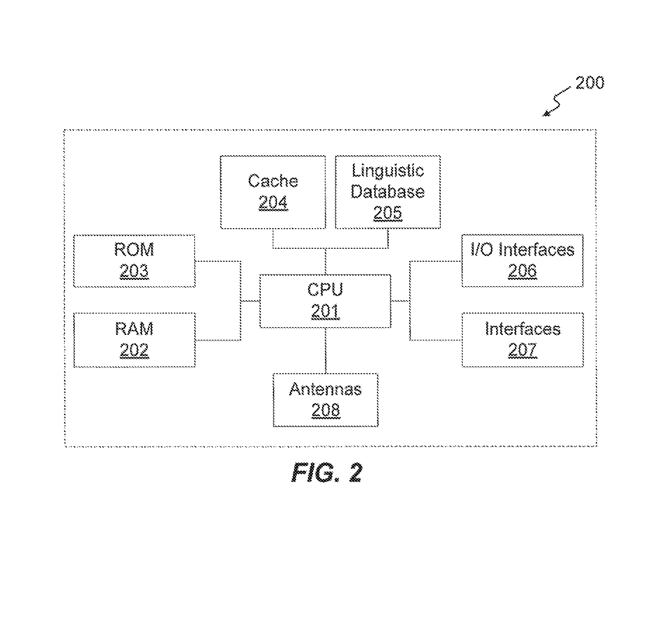

FIG. 2 is a schematic view of an example handheld electronic device 200, consistent with certain disclosed example embodiments. As shown in FIG. 2, handheld electronic device 200 may include one or more of the following components: at least one central processing unit (CPU) 201 (also referred to herein as a processor) configured to execute computer program instructions to perform processes and methods consistent with the disclosed embodiments, random access memory (RAM) 202 and read only memory (ROM) 203 configured to access and store information and computer program instructions, cache 204 to store data and information, linguistic database 205 to store tables, lists, or other data structures, I/O interfaces 206 (including, for example, interfaces to display 110, keypad 120, and keys 130), software and firmware interfaces 207, antennas 208, etc.

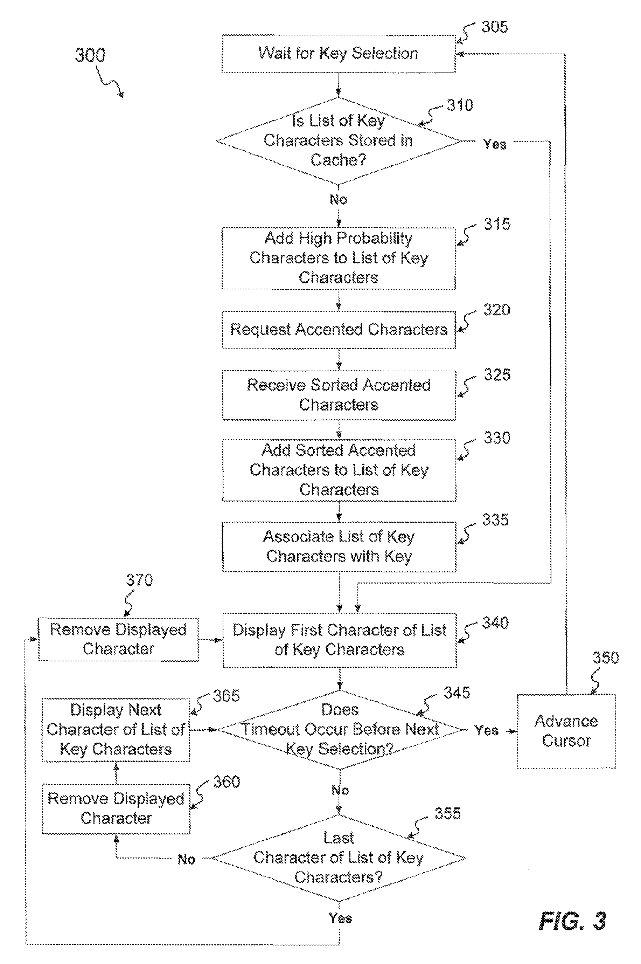

FIG. 3 is an example flowchart 300 illustrating multi-tap character ordering and selection in a handheld communication device, such as handheld electronic device 100, in accordance with certain implementations. Specifically, FIG. 3 illustrates a flowchart 300 consistent with implementations of the present invention that handheld electronic devices 100a and 100b may perform sorting characters and associating the sorted characters with keys.

As shown in FIG. 3, central processing unit 201 of handheld electronic device 100 may be in a wait state waiting for a key selection input (305). A key selection may include, for example, a user pressing key 130. When a user selects key 130, central processing unit 201 may determine if a list of key characters associated with the selected key 130 is stored in cache 204 (310). Central processing unit 201 may determine if a list of key characters associated with the selected key 130 is stored in cache 204 by sending, for example, a fetch request to cache 204. If there is a list of key characters associated with the selected key 130 stored in cache 204, central processing unit may receive the list of key characters from cache 204, and thereby determine that there is a list of key characters associated with the selected key 130. If there is no list of key characters associated with the selected key 130 stored in cache 204 or if the list of key characters associated with the selected key 130 is corrupt, central processing unit 201 may receive an indication from cache 204 that the information is not available or is corrupt and central processing unit 201 may determine that a list of key characters is not stored in cache 204.

If central processing unit 201 determines that a list of key characters associated with the selected key 130 is not stored in cache 204 (310, No), central processing unit 201 may add the high probability characters to a list of key characters associated with associated with the selected key 130 (315). In some implementations, the high probability characters may be added to the list of key characters in an order corresponding to their appearance on key 130. In other implementations, the high probability characters may be added to the list of key characters in an order corresponding to their frequency of usage. For example, linguistic database 205 may include a list of all characters for each language supported by handheld electronic devices 100a and 100b and, for each character in each of the lists of characters, linguistic database 205 may include an indication of the number of times that each character appears in a representative corpus of the language's literature. For example, in an English-language character set, linguistic database 205 may indicate that "e" appears 600 times *(i.e.,* e 600), "t" appears 500 times *(i.e.,* t 500), "a" appears 300 times *(i.e.,* a 300), etc. Thus, central processing unit 201 may add the high probability characters to the list of key characters based on the frequency of usage indicated in linguistic database 105.

Central processing unit 201 may then request accented characters from a database, such as linguistic database 205 (320). In response to the request for accented characters, central processing unit 201 may receive a sorted list of the requested accented characters (325). In some implementations, the received accented characters may be statistically sorted such that a predicted likelihood that the input data reflects a selection of a particular character based on, or as a function of, a frequency of use of the character. Various models may be used to determine frequency, including neural networks. For example, the received accented characters may be sorted according to a frequency of occurrence of the accented characters in the language specified by handheld electronic devices 100a and 100b, a frequency of usage by the user, or any combination thereof. In the Dutch language, for example, the requested accented characters may be sorted in a frequency order of "ö", "ó", "ô", and "ò".

Central processing unit 201 may add the sorted accented characters to the list of key characters (330). In some example implementations, the sorted accented characters may be appended to the high probability characters. As a result, the list of key characters may include the high probability characters in an order corresponding to their appearance on key 130 followed by the accented characters in a statistically sorted order. For example, the list of key characters associated with m/n/o key 130 may be in the order of "m", "n", "o", "ö" "ó","ô", and "ò".

Once central processing unit 201 has completed the list of key characters, central processing unit 201 may associate the list of key characters with the selected key 130 (335). In some implementations, associating the list of key characters with the selected key 130 may include storing the list of key characters in a cache location associated with the selected key 130.

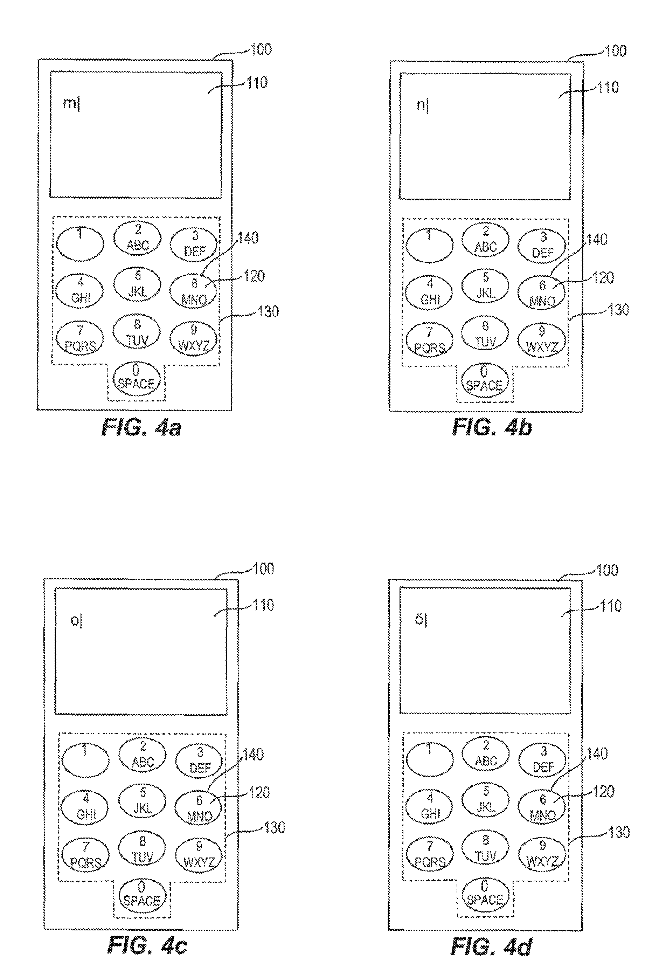

Next, central processing unit 201 may cause the first character of the list of key characters to be displayed to a user (340). In some implementations, central processing unit 201 may cause displays 110a and 110b to display the first character of the list of key characters. For example, referring to FIG. 4a, if the user presses m/n/o key 130, the character "m" will be displayed in display 110 of handheld electronic device 100 along with a cursor indicating the current character display location.

Returning to FIG. 3, central processing unit 201 may determine if a timeout occurs before another selection of the previously-selected key 130 (345). If central processing unit 201 detects another selection of the previously-selected key 130 before a timeout occurs (345, No), central processing unit 201 may determine if the displayed character is the last character in the list of key characters (355). If the displayed character is not the last character in the list of key character (355, No), central processing unit 201 may remove the displayed character (360) and cause the next character in the list of key characters to be displayed in display 110 (365). For example, referring to FIG. 4b, if the m/n/o key 130 is selected again before the timeout occurs, central processing unit will cause the displayed "m" to be replaced on display 110 by "n".

As shown in flowchart 300 of FIG. 3, central processing unit 201 may again determine if a timeout occurs before another selection of the previously-selected key 130 (345). When a key 130 is selected before the timeout occurs (345, No) and central processing unit 201 determines that the displayed character is not the last character in the list of key character (355, No), central processing unit 201 may cause the displayed character to be removed from display 110 (360) and cause the next character in the list of key characters to be displayed in display 110 (365). For example, referring to FIGS. 4c and 4d, if the m/n/o key 130 is selected a third time before the timeout occurs, central processing unit 201 may cause the displayed "n" to be replaced in display 110 by "o", and if the m/n/o key 130 is selected a fourth time before the timeout occurs, central processing unit 201 may cause the displayed "o" to be replaced on display 110 by "ö".

This cycle may continue until central processing unit 201 determines that the next selection of key 130 occurs before a timeout occurs (345, No) and that the displayed character is the last character in the list of key characters (355, Yes), whereupon central processing unit 201 displays the first character in the list of key characters in display 110 (340).

If a timeout occurs before another selection of the previously-selected key 130 (345, Yes), central processing unit 201 may allow the cursor to advance (350) and central processing unit may again remain in a wait state waiting for a key selection (310). In embodiments having languages that are read from the left to the right (e.g., Latin languages), the cursor may advance to the right, whereas in embodiments having languages that are read from the right to the left (e.g., Hebrew, Arabic, etc.), the cursor may advance to the left.

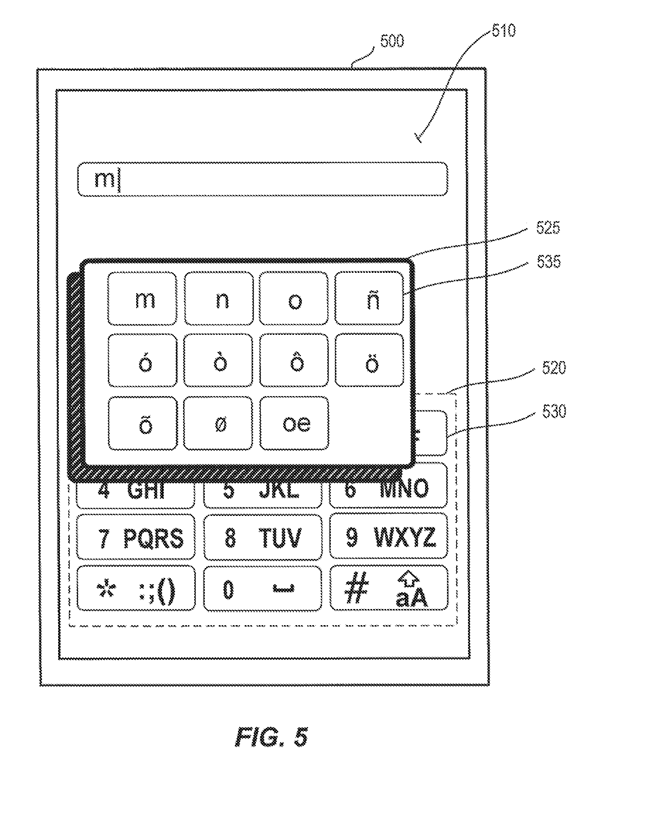

FIG. 5 is a diagram of an example multi-tap handheld electronic device 500, in which systems and methods consistent with the present invention may be implemented. As shown, device 500 has a display 510 with various display components, including a keypad 520 with multiple keys 530 having assigned numerals, characters, symbols, or operations. Display 510 also has an extended keypad 525 with multiple keys 535. Handheld electronic device 500 may also include the components illustrated in FIG. 2, including one or more of the following components: at least one central processing unit (CPU) 201 (also referred to herein as a processor) configured to execute computer program instructions to perform processes and methods consistent with the disclosed embodiments, random access memory (RAM) 202 and read only memory (ROM) 203 configured to access and store information and computer program instructions, cache 204 to store data and information, linguistic database 205 to store tables, lists, or other data structures, I/O interfaces 206 (including, for example, interfaces to display 510, keypad 520, extended keypad 525, keys 530, and extended keys 535), software and firmware interfaces 207, antennas 208, etc. Handheld electronic device of FIG. 5 may be configured to perform the method illustrated in flowchart 300 of FIG. 3.

Display 510 may be any type of visual input/output configured to display one or more characters, diagrams, figures, pictures, words, etc. and/or receive input corresponding to one or more characters, diagrams, figures, pictures, words, etc. and/or to receive input corresponding to one or more diagrams, figures, pictures, words, characters, etc. As shown in FIG. 5, display 500 may also be a touch-screen display, and may be configured to display representations of keypad 520 *(i.e.,* virtual keypad), extended keypad 525 *(i.e.,* virtual extended keypad), keys 530 *(i.e.,* virtual keys), and extended keys 535 *(i.e.,* virtual extended keys).

Keypad 520 and extended keypad 525 may include any combination of keys 530 and extended keys 535, respectively. In some implementations, virtual extended keypad 525 may overlap all or a portion of virtual keypad 520, thereby obscuring all or a portion of virtual keys 530. Although keypad 520 and extended keypad 525 are illustrated in FIG. 5 as a virtual keypad and virtual extended keypad, respectively, keypad 520 and extended keypad 525 may also be realized as a combination of physical and virtual keypads. Keypad 520 and extended keypad 525 may be of any configuration, such as a T20 key arrangement, an AZERTY key arrangement, a QWERTY key arrangement, or other key arrangement, whether presently known or unknown, and either reduced or not reduced.

Keys 530 and extended keys 535 may include physical and/or virtual buttons by which input may be received from a user. Each key 530 and extended key 535 may be assigned a character, symbol, code, or operation. In some embodiments, keys 530 and extended keys 535 may be touch-sensitive, i.e., input may be received by one or more touches from a user.

Each of keys 530 and extended keys 535 may include one or more associated characters. That is, one or more characters are associated with each key 530 and each extended key 535 such that when a user selects a desired key 530 and/or extended key 535, an associated character may be displayed on display 510. In a multi-tap embodiment consistent with certain aspects of the present invention, one or more keys 530 may each have an associated list of key characters, and a user may select one of the characters in the list of key characters by sequentially selecting key 530 a number of times equivalent to the position of a character in the list of characters associated with key 530. That is, for a character in the first position in the list of characters associated with key 530, a user would select key 530 one time, for a character in the second position in the list of characters associated with key 530, a user would select key 530 two times, and so on.

Characters may be printed on keys 530 and/or extended keys 535. In some embodiments, characters printed on keys 530 may be different than characters printed on extended keys 535. In other embodiments, one or more characters printed on keys 530 may be the same as one or more characters printed on extended keys 535. In the implementation illustrated by FIG. 5, each of extended keys 535 may include one character of the list of key characters such that extended keyboard 525 includes all characters in the list of characters.

In the implantation of FIG. 5, extended keypad 525 may be a virtual keypad configured to appear on a display, such as display 510, for a predetermined period of time, which may be calculated based on the detection of one or more predetermined conditions. That is, extended keypad 525 may appear continuously on display 510 when handheld electronic device 500 detects a continuing contact by a user with at least one key 530, *i.e.*, press-and-hold. Thus, for example, when handheld electronic device 500 detects that a user has maintained continuous contact with a key 530, e.g., m/n/o key 530, for a period of time that may exceed a predetermined threshold (e.g., 2-5 seconds), central processing unit 201 of handheld electronic device 500 may cause extended keypad 525, including extended keys 535, to appear on display 510. As shown in FIG. 5, in one embodiment, extended keys 535 may include a single extended key 535 for each character in the list of key characters, *i.e.,* "m", "n", "o", "ñ", "ó", "ò", "ô", "ö" "õ", "ø", and "oe". If the user does not press one of extended keys 535 before the predetermined time threshold expires, extended keyboard 525 will be removed from display 510 without a character being displayed in display 510, and central processing unit 201 may return to a wait state waiting for a key selection (310).

If, however, the user selects an extended key 535 of extended keyboard 525, then central processing unit 201 will cause the character drawn on the face of the selected extended key 535 to be displayed in display 510. Extended keyboard 525 will then be removed from display 510, and central processing unit 201 may return to a wait state waiting for a key selection (310).

In the implementation of FIG. 5, the less-frequently used characters, while appearing at the end of a list of key characters, may be accessed with a minimal number of "taps." Specifically, in the implementation illustrated in FIG. 5, the least frequently used characters may be accessed using two taps. That is, selecting any one of the characters printed on the faces of extended keys 535 of the example illustrated in FIG. 5 will require one "press-and-hold" tap of appropriate key 530 and one additional tap of the desired extended key 535.

While the implementations disclosed herein refer to the Latin-based character systems, the disclosed implementations may also be used with any character system. For example, the disclosed implementations may also be used in languages such as, for example, Greek, Cyrillic, Hebrew, Arabic, etc. In addition, although the process illustrated in flowchart 300 is disclosed as a single process, it is anticipated that elements of the process may be performed as sub-processes. For example, in some implementations, one sub-process may begin when a list of key characters is not stored in cache (310) and end when a list of key characters is associated with a key (335). In other example implementations, the process may begin in a wait state waiting for a key selection (305), bypass items 310, 315, 320, 325, 330, and 335, proceed to display the first character of the list of key characters (340), and end in a wait state waiting for a key selection (335).

The apparatus and method disclosed herein may be configured to reduce the number of key presses required to enter characters and/or text, thereby extending battery life and enabling more efficient memory usage. In addition, the apparatus and method disclosed herein may provide sorted accented characters to a user in a probability order such that the accented characters are sorted without explicit instructions from a programmer in every language supported by the device. The apparatus and method disclosed herein may also provide accented characters in an sorted order that is immune to language reforms, as well as amenable to a user's custom words. Similarly, the methods and apparatus as described in connection with the disclosed implementations may be configured to operate in any electronic data and/or information entry system or device.

It will be apparent to those skilled in the art that various modifications and variations can be made in the system and method for sorting characters. It is intended that the standard and examples be considered as examples only, with a true scope of the disclosed embodiments being indicated by the following claims and their equivalents.

## Claims

1. A computer-implemented method for statistically sorting characters for multi-tap keyboards, comprising:
receiving, by a processor, an indication of a selection of a key;
adding, by the processor, one or more high probability characters to a list of key characters;
requesting, by the processor, a plurality of sorted characters;
receiving, by the processor, the plurality of sorted characters;
adding, by the processor, the plurality of sorted characters to the list of key characters;
associating, by the processor, the list of key characters with the selected key;
and
displaying, on a display device, a first character of the list of key characters.

2. The computer-implemented method as in claim 1, wherein adding the plurality of sorted characters to the list of key characters includes:
appending, by the processor, the plurality of sorted characters to the one or more high probability characters in the list of key characters.

3. The computer-implemented method as in claim 1 or 2, further including:
sending, by the processor, a request to cache to retrieve a stored list of key characters; and
receiving, by the processor, an indication that the stored list of key characters is not available in the cache.

4. The computer-implemented method as in any of claims 1 to 3, wherein associating the list of key characters with the selected key includes:
storing the list of key characters in the cache.

5. The computer-implemented method as in any of claims 1 to 4, wherein the one or more high probability characters includes one or more characters printed on the selected key.

6. The computer-implemented method as in any of claims 1 to 5, wherein the plurality of sorted characters includes characters having diacritical marks.

7. The computer-implemented method as in any of claims 1 to 6, wherein the plurality of sorted characters are sorted according to a statistical algorithm.

8. The computer-implemented method as in any of claims 1 to 7, wherein the plurality of sorted characters are sorted according to a frequency of usage in a language.

9. An apparatus for statistically sorting characters for multi-tap keyboards, the apparatus comprising:
at least one memory to store data and instructions; and
at least one processor configured to access the at least one memory and, when executing the instructions, to:
receive an indication of a selection of a key;
add one or more high probability characters to a list of key characters;
request a plurality of sorted characters;
receive the plurality of sorted characters;
add the plurality of sorted characters to the list of key characters;
associate the list of key characters with the selected key; and
cause a first character of the list of key characters to be displayed on a display device.

10. The apparatus as in claim 9, wherein when the at least one processor is configured to add the plurality of sorted characters to the list of key characters, the at least one processor is further configured to:
append the plurality of sorted characters to the one or more high probability characters in the list of key characters.

11. The apparatus as in claim 9 or 10, wherein the at least one processor is further configured to:
send a request to cache to retrieve a stored list of key characters; and
receive an indication that the stored list of key characters is not available in the cache.

12. The apparatus as in any of claims 9 to 11, wherein when the at least one processor is configured to associate the list of key characters with the selected key, the at least one processor is further configured to:
store the list of key characters in the cache.

13. The apparatus as in any of claims 9 to 12, wherein the one or more high probability characters include one or more characters printed on the selected key.

14. The apparatus as in any of claims 9 to 13, wherein the plurality of sorted characters includes characters having diacritical marks.

15. The apparatus as in any of claims 9 to 14, wherein the plurality of sorted characters are sorted according to a statistical algorithm.

16. The apparatus as in any of claims 9 to 15, wherein the plurality of sorted characters are sorted according to a frequency of usage in a language.
